(19) Europäisches Patentamt
European Patent Office
Office européen des brevets

(11) **EP 2 073 546 A1**

(12) **EUROPEAN PATENT APPLICATION**
published in accordance with Art. 153(4) EPC

(43) Date of publication:
**24.06.2009 Bulletin 2009/26**

(51) Int Cl.:
*H04N 7/173* (2006.01)   *H04N 17/00* (2006.01)

(21) Application number: **06811727.4**

(22) Date of filing: **13.10.2006**

(86) International application number:
**PCT/JP2006/320439**

(87) International publication number:
**WO 2008/044306 (17.04.2008 Gazette 2008/16)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Leader Electronics Corporation**
**Yokohama-shi**
**Kanagawa 223-8505 (JP)**

(72) Inventors:
• **HIRANO, Sayo**
**c/o Leader Electronics Corp.**
**Yokohama-shi**
**Kanagawa 223-8505 (JP)**

• **AKADA, Susumu**
**c/o Leader Electronics Corp.**
**Yokohama-shi**
**Kanagawa 223-8505 (JP)**
• **KOBAYASHI, Kazumi**
**c/o Leader Electronics Corp.**
**Yokohama-shi**
**Kanagawa 223-8505 (JP)**

(74) Representative: **Blodig, Wolfgang**
**Wächtershäuser & Hartz**
**Patentanwälte**
**Weinstrasse 8**
**80333 München (DE)**

(54) **DESIRED BIT RATE DVB-H SIGNAL FORMING METHOD AND DEVICE**

(57)    A method of creating a DVB-H signal having a desired bit rate includes the steps of preparing a TS signal of DVB-H Standard in conformity to a first bit rate (71), storing a burst period (T) of the TS signal and a second bit rate higher than the first bit rate, determining the number (a) of NULL packets to be increased in the burst period (T) (73), storing the TS signal including the number (n) of packets in the burst period in units of packets (74), storing the number (a) of NULL packets next to the stored TS packets (76, 77), and repeating the step (74) and the step (76, 77) until the complete TS signal is stored (75). An apparatus comprises means for executing the steps.

Fig. 7

EP 2 073 546 A1

**Description**

**TECHNICAL FIELD**

The present invention relates to a method and apparatus for creating a TS (Transport Stream) signal having a desired bit rate, in conformity to DVB (Digital Video Broadcasting) - H (Handheld) Standard, and more particularly, to a method and apparatus for preparing a TS signal of DVB-H Standard having a predetermined bit rate to create a TS signal of DVB-H Standard having a desired bit rate higher than the predetermined bit rate.

**BACKGROUND ART**

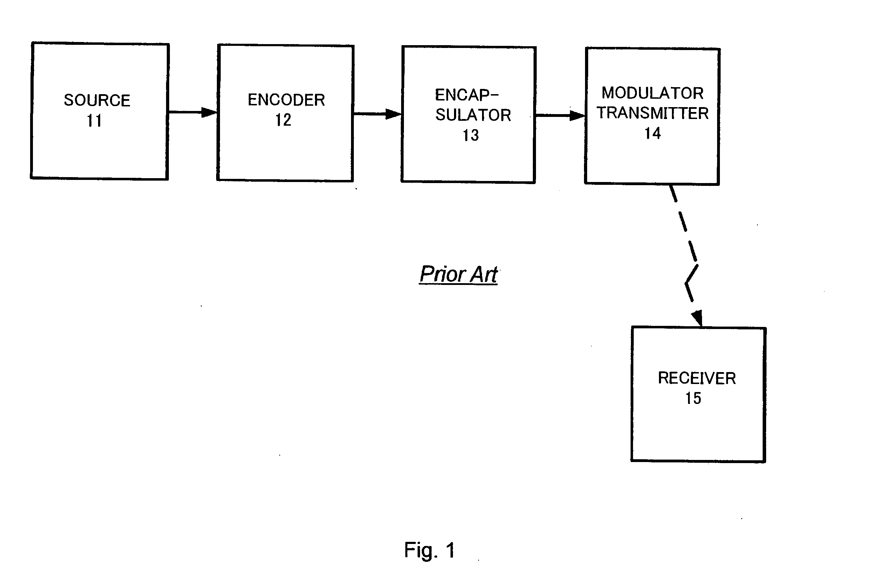

Fig. 1 illustrates an exemplary system for testing digital terrestrial broadcasting waves generated from a TS signal of DVB-H Standard. As illustrated in Fig. 1, a source 11 outputs an SDI (Serial Digital Interface) video signal representative of analog or digital source data (for example, a color bar (a test pattern for testing)) to a DVB-H encoder 12. The DVB-H encoder 12 generates an IP signal (data in IP format) of DVB-H Standard from the source data based on predetermined conditions (for example, a bit rate and the like). An IP encapsulator 13 multiplexes information required to receive and reproduce a program (PSI (Program Specification Information), SI (Service Information), time slicing (Time Slicing) information) on the IP signal, and also generates an MPEG-2 TS signal of DVB-H Standard. Modulator/transmitter 14 modulates the MPEG-2 TS signal based on desired transmission conditions to generate a digitally modulated signal. The desired transmission conditions include, for example, a transmission system (DVB-H), a modulation scheme (QPSK, 16QAM, 64QAM or the like), a bandwidth (6 MHz, 7 MHz, 8 MHz or the like), a convolution coding rate (1/2, 2/3, 3/4, 5/6, 7/8 or the like), a guard interval ratio (1/4, 1/8, 1/6, 1/32 or the like), and so on. Modulator/transmitter 14 further converts the frequency of the digitally modulated signal to generate RF broadcasting waves. A receiver 15 receives RF broadcasting waves, displays an image on a display of the receiver, and outputs a voice from an output unit of the receiver. For testing the receiver 15, it is necessary to confirm whether or not the receiver 15 correctly operates even when the desired transmission conditions have been changed.

For reference, the bit rate of the MPEG-2 TS signal depends on the desired transmission conditions. Specifically, when the transmission system is DVB-H, the modulation scheme is QPSK, the bandwidth is 8 MHz, the convolution coding rate is 1/2, and the guard interval ratio is 1/4, respectively, the bit rate is 4.976471 M (Mega) [bit/sec]. Here, if the modulation scheme included in the desired transmission conditions is changed from QPSK to 64QAM, the bit rate is changed from 4.976471 M[bit/sec] to 14.929412 M[bit/sec].

Therefore, in order to provide RF broadcasting waves in conformity to a variety of transmission conditions, the DVB-H encoder 12 must change a desired bit rate to re-assemble the IP signal. IP encapsulator 13 must also re-assemble the MPEG-2 TS signal of DVB-H Standard. Alternatively, a bit rate converter must be provided between the IP encapsulator 13 and modulator/transmitter 14 if the DVB-H encoder 12 or IP encapsulator 13 does not re-assemble these signals.

A bit rate converter is disclosed, for example, in Patent Document 1 shown below.

Patent Document 1: JP-A-11-205789 (Fig. 1)

DISCLOSURE OF THE INVENTION

PROBLEMS TO BE SOLVED BY THE INVENTION

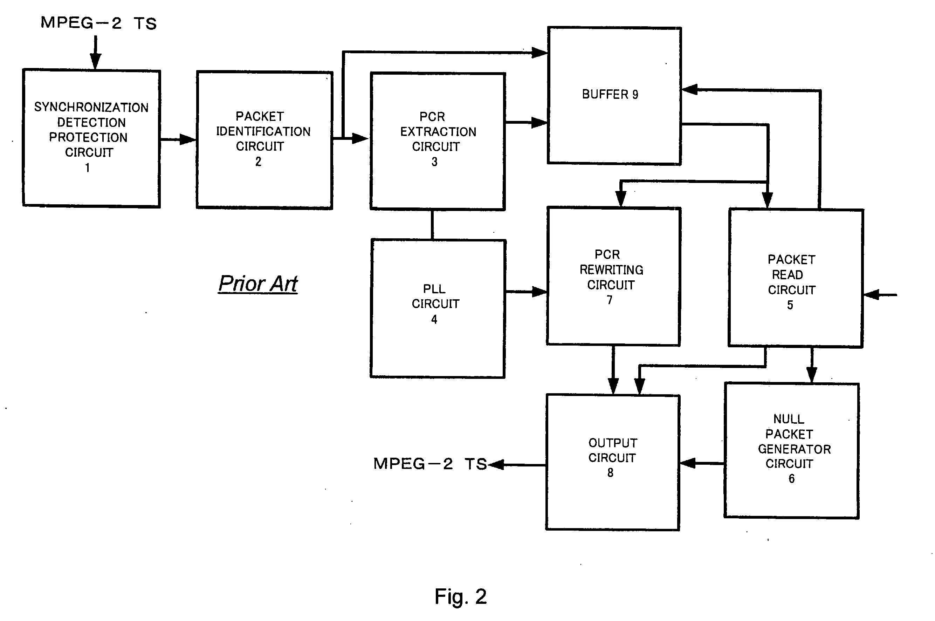

Fig. 2 illustrates a block diagram of the bit rate converter disclosed in Fig. 1 of JP-A-11-205789 (Patent Document 1). For increasing the bit rate, the bit rate converter of Fig. 2 increases NULL packets within an incoming MPEG-2 TS signal using a NULL packet generator circuit 6.

The bit rate converter illustrated in Fig. 2 is capable of converting the bit rate in real time, so that a device based on hardware resources as illustrated in Fig. 2 is expensive.

Also, due to a requirement of rewriting a PCR value in the MPEG-2 TS signal such as the DVB-T signal input to the bit rate converter illustrated in Fig. 2, a PCR rewriting circuit 7 must be provided in the bit rate converter illustrated in Fig. 2.

Objects of the present invention include at least one of the following items:

proviing a method (or an apparatus) of creating a tS signal of DVB-H Standard (DVB-H signal) having a desired bit rate, based on software resources;
providing a bit rate converting method (or apparatus) suitable for a TS signal of DVB-H Standard (DVB-H signal);
providing a bit rate converting method (or apparatus) having a simple structure; and
items which become apparent to those skilled in the art with reference to the following embodiments described below and the accompanying drawings.

MEANS FOR SOLVING THE PROBLEM

A method of the present invention includes the steps of preparing a TS signal of DVB-H Standard in accordance with a first bit rate (71), storing a burst period (T) of the TS signal and a second bit rate higher than the first bit rate, determining the number (a) of NULL packets to be increased in the burst period (T) (73), storing the TS signal including the number (n) of packets in the burst period in units of packets (74), storing the number (a) of NULL packets next to the stored TS packets (76, 77), and repeating the step (74) and the step (76, 77) until the complete TS signal is stored (75).

The step (71) may include the step of storing the TS signal as a single input file. Preferably, the first bit rate is the lowest bit rate which conforms to transmission conditions.

The method of the present invention may further include the step of determining whether or not the first bit rate is changed (72).

The method of the present invention may further include the steps of storing the length of the packets which make up the TS signal, and calculating the number (n) based on the first bit rate, the burst period (T), and the length of the packets.

The step (73) may include the step of calculating the number (a) based on the number (n) and the second bit rate. The step (74) may include the step of storing the TS signal in a plurality of recording areas, where each record area stores one TS packet. The step (76, 77) may include the step of inserting a plurality of record areas for NULL packets next to the last record area of the plurality of record areas, where each record area for NULL packet stores one NULL packet.

The method of the present invention may further include the step of storing the TS packets stored at the step (74) and the NULL packets stored at the step (76, 77) as one output file. Alternatively, the method of the present invention may further include the step of storing all packets stored in the record areas as one output file.

An apparatus of the present invention comprises means (63) for storing a TS signal of DVB-H Standard in conformity to a first bit rate, a burst period (T) of the TS signal, and a second bit rate higher than the first bit rate, and means (61) for determining the number (a) of NULL packets to be increased in the burst period (T). The means (61) controls (74) to store the TS signal including the number (n) of packets in the burst period in units of packets, the means (61) controls (76, 77) to store the number (a) of NULL packets next to the stored TS packets, and the means (61) repeats (75) the step (74) and the step (76, 77) until the complete TS signal is stored.

## BRIEF DESCRIPTION OF THE DRAWINGS

[Fig. 1]
Fig. 1 illustrates an exemplary system for testing digital terrestrial broadcasting waves generated from a TS signal of DVB-H Standard (DVB-H signal).
[Fig. 2]
Fig. 2 illustrates a block diagram of a bit rate converter disclosed in Fig. 1 of JP-A-11-205789 (Patent Document 1).
[Fig. 3]

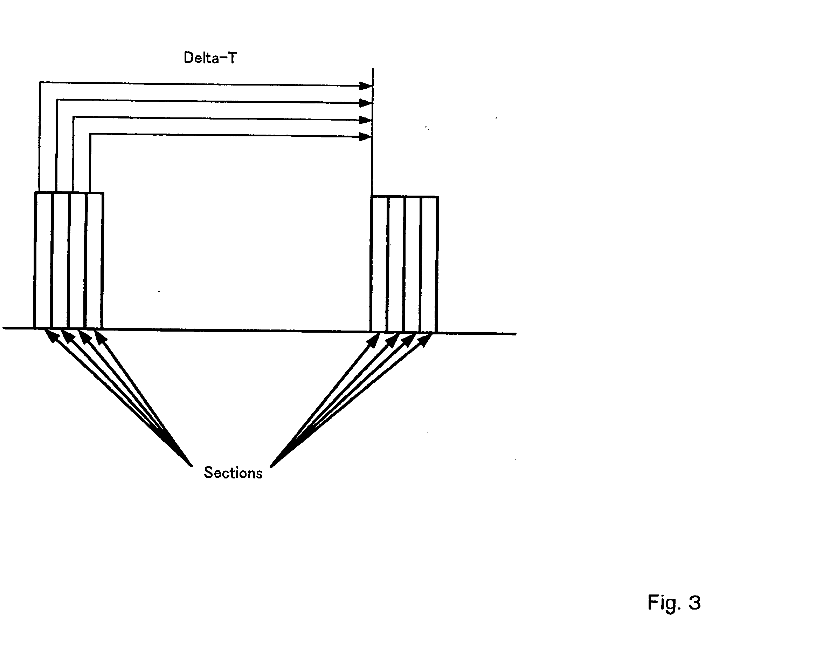

Fig. 3 shows an MPE section structure of the TS signal of DVB-H Standard (DVB-H signal) in a simplified form.
[Fig. 4]

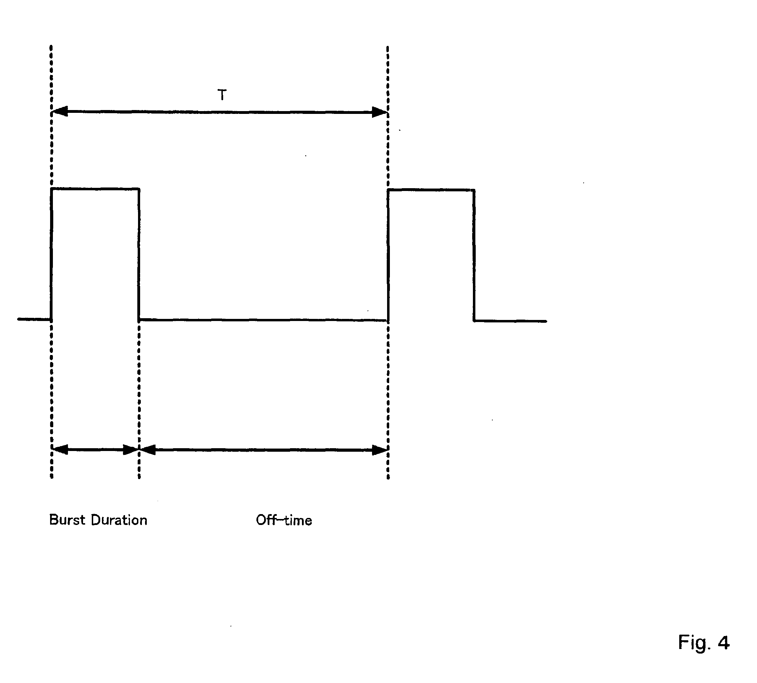

Fig. 4 shows a burst structure of the TS signal of DVB-H Standard in a simplified form.
[Fig. 5]

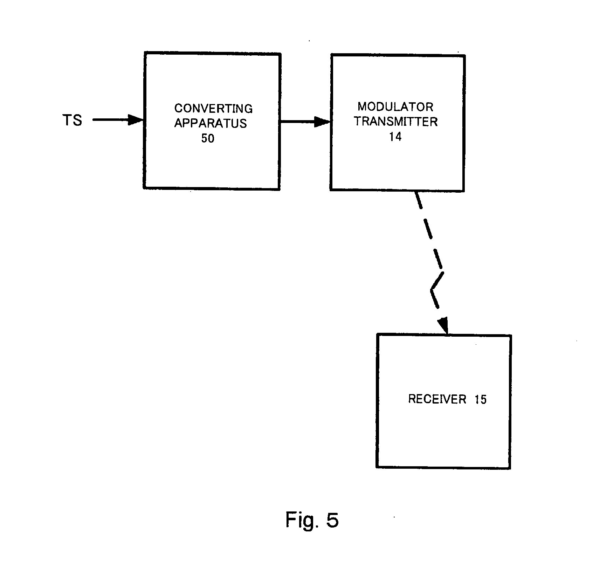

Fig. 5 illustrates an exemplary system of the present invention for testing digital terrestrial broadcasting waves.
[Fig. 6]

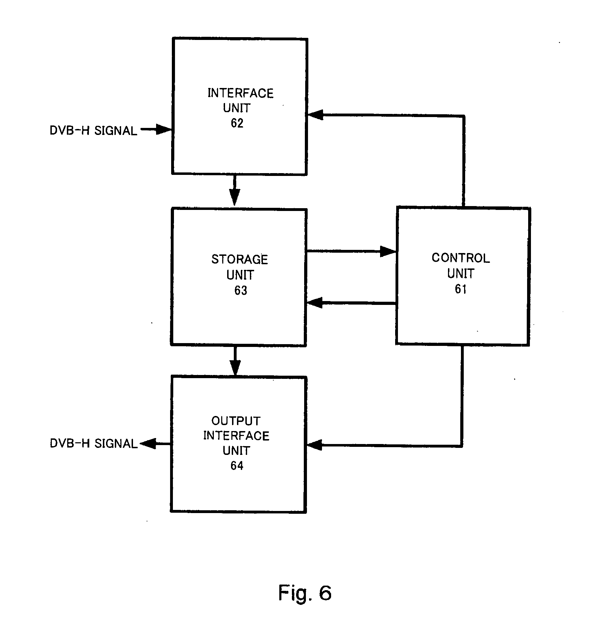

Fig. 6 generally illustrates, in a block diagram, a bit rate converting apparatus 40 (apparatus for creating a DVB-H signal having a desired bit rate according to the present invention) of Fig. 5.
[Fig. 7]

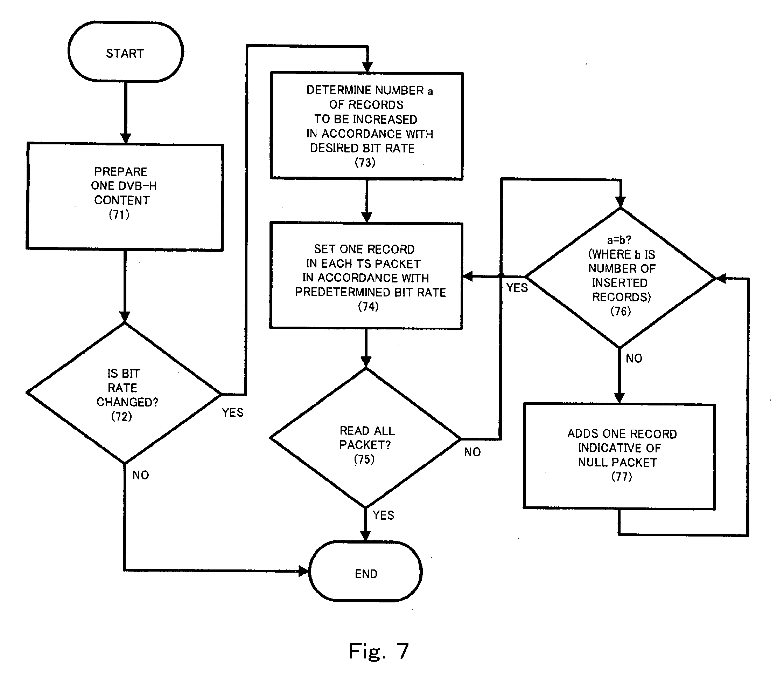

Fig. 7 generally illustrates a flow chart of a method according to the present invention for creating a DVB-H signal having a desired bit rate.
[Fig. 8]

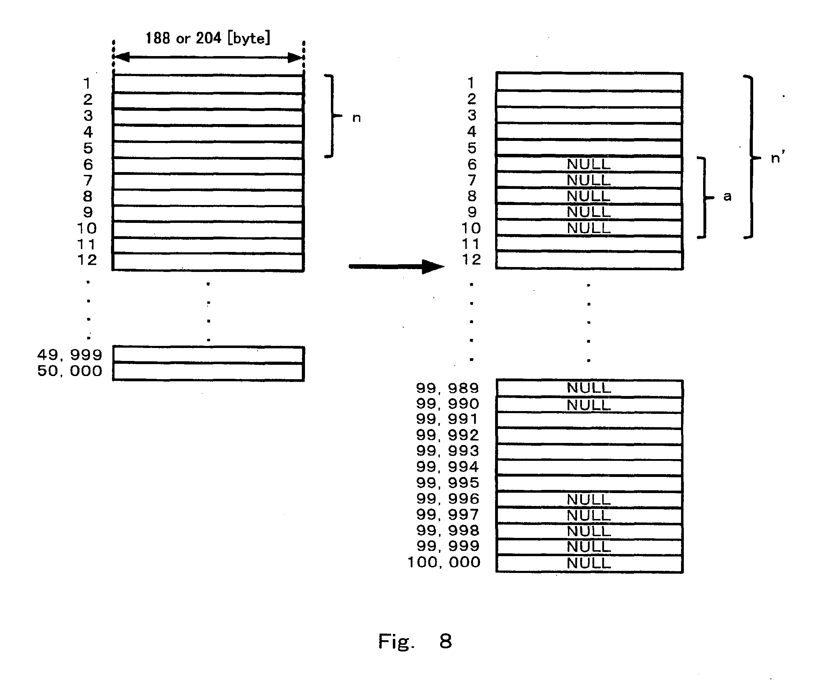

Fig. 8 is a diagram for describing a plurality of record areas for storing contents of TS packets.

BEST MODE FOR CARRYING OUT THE INVENTION

The digital terrestrial broadcasting for portable devices (or mobile devices), for example, in Europe must conform to the TS signal of DVB-H Standard. DVB-H Standard is an improved version of DVB-T Standard for use with portable devices, and employs a technology called "time slicing" in order to reduce power consumption of a receiver circuit in a portable device. Fig. 3 shows an MPE section structure of a TS signal of DVB-H Standard (DVB-H signal) in a simplified form. As shown in Fig. 3, Each MPE section in the DVB-H signal, which forms part of a program, has a header which includes temporal information called "Delta-T." Fig. 4 shows a burst structure of the TS signal of DVB-H Standard in a simplified form. Since the DVB-H signal is transmitted or received at a burst, a receiver in a portable device is powered on only during a corresponding burst duration based on the temporal information called "Delta-T" encapsulated in the DVB-H signal, to reduce the power consumption.

As described above, an apparatus (hardware resources) as illustrated in Fig. 2 is expensive. The DVB-H encoder 12 and IP encapsulator 13 as illustrated in Fig. 1 are expensive as well. In consideration of such a circumstance, the inventors have recognized that an approach for changing the bit rate using software resources is inexpensive.

Also, the DVB-H signal is created on the basis of IP-formatted data. Stated another way, the receiver 15 returns a DVB-H signal to an IP-formatted data to reproduce the IP-formatted data. Therefore, packets in the DVB-H signal need not include a PCR value. In consideration of such a circumstance, the inventors have recognized that a bit rate converting approach suitable for the DVB-H signal need not rewrite the PCR value.

Fig. 5 illustrates an exemplary system according to the present invention for testing digital terrestrial broadcasting waves.

A bit rate converting apparatus illustrated in Fig. 5 is based on software resources. Accordingly, as compared with a bit rate converting apparatus based on hardware resources (a circuit which requires a clock signal or an operation signal), bit rate converting circuit 50 based on software resources is inexpensive.

In addition, once the bit rate converting apparatus 50 receives a TS signal of DVB-H Standard and saves the contents of the signal, the system of the present invention does not subsequently require the DVB-H encoder 12 or IP encapsulator 13 shown in Fig. 1. In other words, since the bit rate converting apparatus 50 utilizes the saved TS signal of DVB-H Standard to create a DVB-H signal having a desired bit rate, the system of the present invention is inexpensive.

Preferably, the DVB-H signal saved in the bit rate converting apparatus 50 has a predetermined bit rate, and the predetermined bit rate is low. In other words, a variety of bit rates equal to or higher than the predetermined bit rate can be provided by preparing a low bit rate and increasing the prepared predetermined bit rate.

Fig. 6 generally illustrates a block diagram of the bit rate converting apparatus 50 (apparatus for creating a DVB-H signal having a desired bit rate according to the present invention) in Fig. 5. Fig. 7 generally illustrates a method of creating a DVB-H signal having a desired bit rate according to the present invention.

The bit rate converting apparatus 50 (for example, a computer) comprises a control unit 61 (for example, a CPU) for executing the method of the present invention; an input interface unit 62 (for example, a PCI bus) for receiving a TS signal of DVB-H standard; a storage unit 63 (for example, an HD) for storing a control program and capable of storing data such as the TS signal of DVB-H Standard; and an output interface unit 64 (for example, a PCI bus) capable of outputting data stored in the storage unit 63 as a TS signal of DVB-H Standard. The input interface 62 and output interface 64 can be implemented by a single input/output interface.

The control unit 61 reads the control program stored in the storage unit 63, and starts the control program. The control unit 61 stores instructions from a user, or automatically stores a TS signal of DVB-H Standard having a predetermined bit rate in the storage unit 63 through the input interface unit 62 (step 71).

In this regard, the TS signal of DVB-H Standard having a predetermined bit rate is generated in real time, for example, by the DVB-H encoder 12 and IP encapsulator 13 shown in Fig. 1, and the storage unit 63 stores a complete TS signal of DVB-H Standard output from the IP encapsulator 13 as one input file. Alternatively, the storage unit 63 stores a subset of TS signal of DVB-H Standard output from the IP encapsulator 13 only for a certain period as one input file. Preferably, the predetermined bit rate is the lowest bit rate which conforms to transmission conditions for testing (for example, the modulation scheme is QPSK, 16QAM, or 64QAM; the bandwidth is 6 MHz, 7 MHz, or 8 MHz; the convolution coding rate is 1/2, 2/3, 3/4, 5/6, or 7/8; and the guard interval ratio is 1/4, 1/8, 1/16, or 1/32) (for example, 3.732353M [bit/sec] which conforms to a combination of (QPSK, 6 MHz, 1/2, 1/4).

Alternatively, the TS signal of DVB-H Standard having a predetermined bit rate has been previously stored, for example, on a recording medium (for example, CD-ROM, DVD-ROM), not shown, and data on the TS signal of DVB-H Standard having the predetermined bit rate is copied in the storage unit 63 as one input file. When the storage medium is an HD (external or on a network), the HD may be regarded as part of the storage unit 63 (in this event, data on the TS data stored in the HD is not copied).

In this way, one complete TS signal of DVB-H Standard having the predetermined bit rate is prepared in the storage unit 63 (step 71).

The control unit 61 stores the predetermined bit rate (for example, 3.732353 M[bit/sec]) in conformity to a combination of (QPSK, 6 MHz, 1/2, 1/4) of the one complete TS signal stored in the storage unit 63, in the storage unit 63 (for example, HD). The predetermined bit rate is selected or input, for example, by the user.

Alternatively, the control unit 61 can calculate a predetermined bit rate from a stored TS signal. Specifically, the control unit 61 extracts an NIT (Network Information Table) packet from TS packets which make up a TS signal (PID (Packet ID) of NIT is "0x0010" (0010 in hexadecimal notation)). The control unit 61 analyzes the description of the NIT packet, and retrieves values corresponding to Constellation, Bandwidth, code_rate, and guard_interval. For example, when the value of Constellation indicates "00," the modulation scheme is QPSK; when the value of Bandwidth indicates "010," the bandwidth is 6 MHz; when code_rate indicates "000," the convolution coding rate is 1/2; and when guard_interval indicates "11," the guard interval ratio is 1/16. The control unit 61 can calculate the predetermined bit rate from the bandwidth, modulation scheme, convolution encoding rate, and guard interval ratio.

The predetermined bit rate is calculated, for example, by an equation: (54,000,000*P/204)*M*(B/8)*C*D [bit/sec], where P is the length of one TS packet; M is a value corresponding to the modulation scheme (64QAM=3/4, 16QAM=1/2, QPSK=1/4); B is the bandwidth; C is the convolution coding rate; and G is a value corresponding to the guard interval ratio (1/32=32/33, 1/16=16/17, 1/8=8/9, 1/4=4/5).

When one packet has a length of 188 bytes, the predetermined bit rate in conformity to a combination of (QPSK, 6 MHz, 1/2, 1/4) is calculated as

$$(54,000,000*188/204)*(1/4)*(6/8)*(1/2)*(4/5)=3,732,353$$

$$[bit/sec]=3.732353\ M[bit/sec].$$

The control unit 61 also stores a burst period (T) related to the TS signal stored in the storage unit 63. The burst period (T) is the sum of the burst duration and an off-time, and is equal to Delta-T from the head of a burst to the head of the next burst. The burst period (T) is selected or input, for example, by the user. In this regard, the burst period (T) is a value required to generate a TS signal (for example, included in time slicing information required by the IP encapsulator 13 in Fig. 1), and this value is known. Alternatively, if a TS signal was generated through an unknown process, the TS signal may be input to an analyzer to analyze and find the burst period (T).

The control unit 61 determines whether or not the predetermined bit rate is changed in accordance with a selection or an input from the user (step 72). When the predetermined bit rate is changed (for example, when the control unit 61 senses an affirmative input ("Yes") from the user), the control unit 61 waits for a desired bit rate (a converted bit rate which is higher than the predetermined bit rate). The control unit 61 stores the desired bit rate selected or input by the user in the storage unit 63.

The control unit 61 determines the ratio (x) of the desired bit rate to the predetermined bit rate. When the modulation scheme is changed from QPSK to 16QAM among the transmission conditions for testing (for example, when the transmission system is DVB-H; the modulation scheme is QPSK; the bandwidth is 6 MHz; the convolution coding rate is 1/2; and the guard interval ratio is 1/4), the desired bit rate is 7.464706 M[bit/sec]. In this example, the ratio (x) of the desired bit rate (7.464706 M[bit/sec]) to the predetermined bit rate (3.732353 M[bit/sec] is two.

The control unit 61 also determines the number (n) of packets which make up a TS signal in accordance with the predetermined bit rate at the burst period (T[sec]). The number (n) of packets in the burst period can be calculated from the predetermined bit rate [bit/sec], the burst period [sec], and the length (bytes) of one TS packet.

The control unit 61 determines the number (a) of records corresponding to the number of NULL packets to be increased at the burst period (T[sec]) (step 73). The number (a) of records corresponding to the number of NULL packets to be increased is calculated in accordance with the following equations:

$$a = n*(x-1)$$

when n=5 and x=2, a=5*(2-1)=5

The control unit 61 reads all TS packets (from the first packet to the last packet) which make up one complete TS signal of DVB-H Standard having the predetermined bit rate stored in the storage unit 63 in units of packets. Specifically, the control unit 61 reads n packets (the number packets at the burst period (T[sec])) from the first packet, and stores them in a plurality of record areas within the storage unit 63 in units of packets. As a result, the storage unit 63 stores one TS packet in each record area (step 74). Each record area has a capacity equivalent to the length of one TS packet (188 or 204 bytes), and stores the contents of data in one TS packet. For example, a plurality of record areas make up a table generated by part of the control program (database application software), and the table stores the contents of data in one TS packet in each row.

Fig. 8 is a diagram for describing a plurality of record areas for recording the contents of data in TS packets. As shown in the left-handed figure of Fig. 8, the number (n) of packets which make up a TS signal in accordance with the predetermined bit rate, in the burst period (T), is five, by way of example.

The control unit 61 determines whether or not it has read all the TS packets which make up one complete TS signal stored in the storage unit 63 in one read (one burst period) (step 75). When a negative response results at step 75, the control unit 61 executes step 76. In an initial state (step 74), the number (b) of records inserted or added in the burst period (T[sec]) is zero. The control unit 61 determines whether or not the number (a) of records corresponding to the number of NULL packets to be increased is equal to the number (b) of records inserted or added in the burst period (T[sec]) (step 76). When a negative response results at step 76, the control unit 61 stores the contents of data in a NULL packet in one record area next to the last record area which stores data (step 77). The control unit 61 also calculates the sum of the number (b) of inserted or added records and one, and substitutes the sum into b (b=b+1). When b=0, b=1 stands. Subsequently, the control unit 61 repeats steps 76, 77 until a=b stands. When a=5, b=5 stands. Stated another way, when a=5, five record areas are inserted or added in order to store five NULL packets (see the right-handed figure in Fig. 8).

When an affirmative response results at step 76, the control unit 61 resumes the reading. The control unit 61 reads next n packets (the number of packets in the burst period (T)) from a packet next to that at which the control unit 61 interrupted the reading (for example, in the example of the left-handed figure in Fig. 8, the sixth packet). The control unit 61 stores the packets on a one-by-one basis in a plurality of record areas within the storage unit 63 from one record area (for example, the eleventh packets in the example of the right-hand drawing in Fig. 8) next to the last record area which stores data (step 74).

The control unit 61 repeats steps 76, 77, 74, 75 until an affirmative response results at step 75.

When an affirmative response results at step 75, the control unit 61 writes all TS packets which make up one complete TS signal of DVB-H Standard having a desired bit rate (from the first packet to the last packet) into the storage unit 63 as one output file in units of packets in response to an instruction from the user or automatically for storage therein based on a table having a record areas for storing data (including the TS packets which make up one complete TS signal having a predetermined bit rate, and NULL packets inserted or added in accordance with the desired bit rate) (in an example in which the storage unit 63 stores a total number 50,000 of TS packets which make up one complete TS signal stored in the storage unit 63, and a=5, 50,000 NULL packets are added to record areas (see the right-handed figure in Fig. 8)), followed by the termination of the control program. Part of the storage unit 63 may be a storage medium (CD-ROM, DVD-ROM, external HD or HD on a network). For example, the modulator/transmitter 14 in Fig. 5 can read a TS signal of DVB-H Standard having a desired bit rate stored in the storage unit 63 through the output interface 64 for reproduction at the desired bit rate. When the modulator/transmitter 14 is applied with desired transmission conditions, the modulator/transmitter 14 rewrites NIT packets within the TS signal to NIT packets which conform to the desired transmission conditions.

The bit rate converting apparatus 50 utilizes data in the TS signal of DVB-H Standard as they are. In other words, the bit rate converting apparatus 50 does not change Delta-T encapsulated in the TS signal of DVB-H Standard having the predetermined bit rate. It is therefore possible to create a DVB-H signal having a desired bit rate while Delta-T is maintained.

It should be understood that the present invention is not limited to the illustrative embodiment described above, and the illustrative embodiment described above can be readily modified by those skilled in the art without departing from the scope of the invention defined by the appended claims.

**Claims**

1. A method comprising the steps of:

   preparing a TS signal of DVB-H Standard in accordance with a first bit rate (71);
   storing a burst period (T) of the TS signal and a second bit rate higher than the first bit rate;
   determining the number (a) of NULL packets to be increased in the burst period (T) (73);
   storing the TS signal including the number (n) of packets in the burst period in units of packets (74);
   storing the number (a) of NULL packets next to the stored TS packets (76, 77); and
   repeating the step (74) and the step (76, 77) until the complete TS signal is stored (75).

2. A method according to claim 1, wherein:

   said step (71) includes the step of storing the TS signal as a single input file.

3. A method according to claim 1, wherein:

said first bit rate is the lowest bit rate which conforms to transmission conditions.

4. A method according to claim 1, further comprising the step of:

   determining whether or not the first bit rate is changed (72).

5. A method according to claim 1, further comprising the steps of:

   storing the length of the packets which make up the TS signal; and
   calculating the number (n) based on the first bit rate, the burst period (T), and the length of the packets.

6. A method according to claim 1, wherein:

   said step (73) includes the step of calculating the number (a) based on the number (n) and the second bit rate.

7. A method according to claim 1, wherein:

   said step (74) includes the step of storing the TS signal in a plurality of recording areas, where each record area stores one TS packet.

8. A method according to claim 7, wherein:

   said step (76, 77) includes the step of inserting a plurality of record areas for NULL packets next to the last record area of the plurality of record areas, where each record area for NULL packet stores one NULL packet.

9. A method according to claim 1, further comprising the step of:

   storing the TS packets stored at the step (74) and the NULL packets stored at the step (76, 77) as one output file.

10. A method according to claim 8, further comprising the step of:

    storing all packets stored in the record areas as one output file.

11. A bit rate converting apparatus based on software resources, comprising:

    means (63) for storing a TS signal of DVB-H Standard in conformity to a first bit rate, a burst period (T) of the TS signal, and a second bit rate higher than the first bit rate; and
    means (61) for determining the number (a) of NULL packets to be increased in the burst period (T),
    wherein said means (61) controls (74) to store the TS signal including the number (n) of packets in the burst period in units of packets;
    said means (61) controls (76, 77) to store the number (a) of NULL packets next to the stored TS packets; and
    said means (61) repeats (75) the step (74) and the step (76, 77) until the complete TS signal is stored.

```
┌──────────┐      ┌──────────┐      ┌──────────┐      ┌────────────┐
│  SOURCE  │ ───▶ │ ENCODER  │ ───▶ │  ENCAP-  │ ───▶ │ MODULATOR  │
│    11    │      │    12    │      │ SULATOR  │      │ TRANSMITTER│
│          │      │          │      │    13    │      │     14     │
└──────────┘      └──────────┘      └──────────┘      └────────────┘
                                                              ╲
                                                               ╲
                                                                ╲
                                                          ┌──────────┐
                                                          │ RECEIVER │
                                                          │    15    │
                                                          └──────────┘
```

*Prior Art*

Fig. 1

MPEG−2 TS

SYNCHRONIZATION
DETECTION
PROTECTION
CIRCUIT
1

PACKET
IDENTIFICATION
CIRCUIT
2

PCR
EXTRACTION
CIRCUIT
3

BUFFER 9

PLL
CIRCUIT
4

PCR
REWRITING
CIRCUIT
7

PACKET
READ
CIRCUIT
5

OUTPUT
CIRCUIT
8

NULL
PACKET
GENERATOR
CIRCUIT
6

MPEG−2 TS

*Prior Art*

Fig. 2

EP 2 073 546 A1

Delta-T

Sections

Fig. 3

Fig. 4

EP 2 073 546 A1

TS →

```
┌─────────────┐      ┌─────────────┐
│ CONVERTING  │      │  MODULATOR  │
│ APPARATUS   │ ───→ │ TRANSMITTER │
│     50      │      │     14      │
└─────────────┘      └─────────────┘
```

┌─────────────┐
│             │
│ RECEIVER 15 │
│             │
└─────────────┘

Fig. 5

Fig. 6

CONTROL
UNIT
61

INTERFACE
UNIT
62

STORAGE
UNIT
63

OUTPUT
INTERFACE
UNIT
64

DVB-H SIGNAL

DVB-H SIGNAL

START

PREPARE
ONE DVB-H
CONTENT
(71)

IS BIT
RATE
CHANGED?
(72)

YES

NO

DETERMINE NUMBER a
OF RECORDS
TO BE INCREASED
IN ACCORDANCE WITH
DESIRED BIT RATE
(73)

SET ONE RECORD
IN EACH TS PACKET
IN ACCORDANCE WITH
PREDETERMINED BIT RATE
(74)

a=b?
(WHERE b IS
NUMBER OF
INSERTED
RECORDS)
(76)

YES

NO

ADDS ONE RECORD
INDICATIVE OF
NULL PACKET
(77)

READ ALL
PACKET?
(75)

NO

YES

END

Fig. 7

Fig. 8

## INTERNATIONAL SEARCH REPORT

International application No.

PCT/JP2006/320439

| A. CLASSIFICATION OF SUBJECT MATTER |
|---|
| *H04N7/173*(2006.01)i, *H04N17/00*(2006.01)i |

According to International Patent Classification (IPC) or to both national classification and IPC

| B. FIELDS SEARCHED |
|---|
| Minimum documentation searched (classification system followed by classification symbols) |
| H04N7/173, H04N17/00-17/06, H04N7/24 |

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | ETSI EN 302 304 V1.1.1: "Digital Video Broadcasting; Transmission System for Handheld Terminals" (Nov. 2004), Retrieved on 2007-01-09 from the Internet:<URL:http://www.dvb-h.org/PDF/DVB-H%20Specification%20-%20En302304.V1.1.1.pdf>, page 7 "Time-slicing" | 1-11 |
| A | JP 2001-251266 A (Sony Corp.), 14 September, 2001 (14.09.01), Par. No. [0059]; Fig. 4 (Family: none) | 1-11 |
| A | JP 2006-074647 A (Ikegami Tsushinki Co., Ltd.), 16 March, 2006 (16.03.06), Par. Nos. [0012], [0019]; Fig. 3 (Family: none) | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 January, 2007 (09.01.07) | 23 January, 2007 (23.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/320439

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-205789 A  (NEC Corp.),<br>30 July, 1999 (30.07.99),<br>Par. No. [0040]; Fig. 1<br>(Family: none) | 1-11 |

Form PCT/ISA/210 (continuation of second sheet) (April 2005)

**EP 2 073 546 A1**

**REFERENCES CITED IN THE DESCRIPTION**

**Patent documents cited in the description**

- JP 11205789 A